# EUROPEAN PATENT APPLICATION

(11) **EP 4 852 180 A1**
(43) Date of publication of application: **09.12.2026**
(21) Application number: 25860993.2
(22) Date of filing: 28.08.2025
(51) Int. Cl.: H01M 50/258, H01M 50/211, H01M 50/317, H01M 50/178, B60L 50/60, B60K 1/04

(54) **BATTERY PACK, AND VEHICLE INCLUDING SAME**

(30) Priority: 29.08.2024 KR 20240116709
(71) Applicant: LG Energy Solution, Ltd., Seoul 07335 (KR)
(72) Inventor: PARK, Jun-Hee, Daejeon 34122 (KR); HWANG, Jae-Cheol, Daejeon 34122 (KR)
(74) Representative: Plasseraud IP
(86) International application number: PCT/KR2025/013201
(87) International publication number: WO 2026/049529

(57) **Abstract**

The present disclosure may provide a battery pack including a cell array including a plurality of battery cells; a pack case assembly in which pack cases configured to accommodate at least one of the cell arrays are arranged in plurality; and a venting valve configured to discharge venting gas generated from the battery cell to the outside, wherein the cell array is configured to be inserted into the pack case in a first direction, and the pack cases are configured to be connected in a second direction perpendicular to the first direction.

## Description

### TECHNICAL FIELD

The present disclosure relates to a battery pack and a vehicle including the same.

This application is based on and claims priority from Korean Patent Application No. 10-2024-0116709, filed on August 29, 2024, with the Korean Intellectual Property Office, the disclosure of which is incorporated herein in its entirety by reference.

### BACKGROUND ART

Secondary batteries having high applicability according to product groups and electrical characteristics such as high energy density are commonly applied not only to portable devices but also to an electric vehicle (EV) or a hybrid electric vehicle (HEV) driven by electric power sources.

Such secondary batteries are attracting attention as a new energy source to improve eco-friendliness and energy efficiency in that they have not only a primary advantage of dramatically reducing the use of fossil fuels, but also no by-products generated from the use of energy.

Secondary batteries widely used at present include lithium-ion batteries, lithium polymer batteries, nickel cadmium batteries, nickel hydrogen batteries, nickel zinc batteries, and the like. When a higher output voltage is required, a plurality of battery cells may be connected in series to form a battery module or a battery pack. Additionally, in order to increase the charging and discharging capacity, a plurality of battery cells may be connected in parallel to form a battery module or a battery pack. Therefore, the number of battery cells included in the battery module or battery pack may be variously set according to the required output voltage or the charging and discharging capacity.

When a plurality of battery cells are connected in series/parallel to form a battery pack, it is common to first form a battery module including at least one battery cell, and then add other components using this at least one battery module to form a battery pack or a battery rack. In this case, battery cells are packaged into modules, and the battery modules are packaged into battery packs. Ultimately, the battery packs are mounted in a vehicle, but only the battery cells are used to supply power. This excessive packaging not only requires the design and production of additional parts, but also occupies additional space, which may reduce the space occupancy of the battery cells. Additionally, a battery pack in the form of cell to pack where a plurality of battery cells are directly accommodated in a pack housing or the like without being modularized is also being manufactured.

Recently, with the trend toward increasing capacity of electric vehicle batteries, there is a need to develop battery packs that may maximize space utilization, minimize the number of parts used in the battery pack, and simplify the assembly process in order to increase energy density while maintaining vehicle space.

### DISCLOSURE

### Technical Problem

Therefore, the present disclosure is directed to providing a battery pack in the form of cell to chassis that integrates the battery pack and the vehicle chassis and is configured to directly mount the cell array on the vehicle chassis.

Additionally, the present disclosure is directed to providing a battery pack with enhanced stability by discharging venting gas or the like generated by thermal events in a downward direction of the battery pack.

Additionally, the present disclosure is directed to providing a battery pack that simplifies assembly and disassembly and is easily scaled up or down to match the size of the vehicle by simplifying the structure of the pack case and modularizing the case for easier manufacturing.

Additionally, the present disclosure is directed to providing a battery pack that accommodates the cell array within the pack case by a sliding movement method to facilitate the replacement of a defective cell array with another cell array when the defective cell array is accommodated.

The present disclosure is also directed to providing a vehicle including such a battery pack.

However, technical problems to be solved by the present disclosure are not limited to the above-described problems, and other problems not mentioned herein may be clearly understood by those skilled in the art from the following description of the present disclosure.

### Technical Solution

In order to solve the above problem, the present disclosure may provide a battery pack including a cell array including a plurality of battery cells; a pack case assembly in which pack cases configured to accommodate at least one of the cell arrays are arranged in plurality; and a venting valve configured to discharge venting gas generated from the battery cell to the outside, wherein the cell array is configured to be inserted into the pack case in a first direction, and the pack cases are configured to be connected in a second direction perpendicular to the first direction.

The venting valve may be disposed to pass through at least one venting hole formed on one surface of the pack case.

The venting valve may be configured to pass through the lower plate of the pack case.

The venting valves may be provided in plurality, and the plurality of venting valves may be disposed to be spaced apart from each other in the first direction.

When a thermal event occurs in the battery cell, the venting valve may induce the venting gas to be discharged downward.

The pack case may have a rectangular tubular shape with an opening portion formed on the front or rear surface facing the first direction.

The lower plate of the pack case may be configured to form a step.

The lower plate may be divided into an edge portion protruding downward, a center portion positioned higher than the edge portion, and a middle portion positioned between the edge portion and the center portion and positioned higher than the center portion.

The venting valve may be disposed to pass through the center portion of the lower plate.

The cell array may further include a module cover configured to support the battery cells.

The battery cell may include an electrode lead protruding downward from the lower surface of the battery cell, and the electrode lead may not be covered by the module cover.

The electrode lead and the venting valve may be disposed adjacent to each other.

When a thermal event occurs in the battery cell, venting gas may be configured to be vented downward and discharged to the outside of the battery pack through the venting valve.

The pack case may be configured to be formed by at least one of extrusion, forging, pressing, and casting.

The pack cases constituting the pack case assembly may be configured to be welded together to be coupled.

The pack cases may be configured to expand the size of the pack case assembly in the second direction by being sequentially coupled.

The pack case assembly may be configured to be directly mounted on a chassis of a vehicle.

And, the present disclosure provides a vehicle including a battery pack according to the present disclosure.

Additionally, the present disclosure may provide a vehicle including a cell array including a plurality of battery cells; a pack case assembly in which pack cases configured to accommodate at least one of the cell arrays are arranged in plurality; and a venting valve configured to discharge venting gas generated from the battery cell to the outside, wherein the cell array is configured to be inserted into the pack case in a first direction, the pack cases are configured to be connected in a second direction perpendicular to the first direction, and the pack case assembly is configured to be directly mounted on the chassis of the vehicle.

### Advantageous Effects

According to one aspect of the present disclosure, the case assembly and/or side members constituting the battery pack may be directly coupled to the vehicle chassis, or may itself be utilized as the vehicle chassis. That is, the cell array may be directly mounted on the vehicle chassis. This may increase energy density, improve space utilization, reduce weight, and reduce costs while maintaining the structure and size of the vehicle.

Additionally, according to another aspect of the present disclosure, directional venting is induced to allow venting gas or the like generated by thermal events to be discharged in a downward direction of the battery pack, so that pressure and thermal energy inside the battery pack are efficiently discharged, thereby delaying the chain reaction of heat transfer propagating to neighboring cell arrays and thus enhancing safety.

Additionally, according to still another aspect of the present disclosure, the structure of the pack case may be simplified, and the case may be modularized for easier manufacturing. By sequentially combining a plurality of such modularized pack cases, assembly is simplified, customization is possible to match various sizes according to different vehicle types, and cost savings may be achieved through parts commonization.

Additionally, according to still another aspect of the present disclosure, the cell array may be inserted into the pack case by a sliding movement method, thereby making assembly and coupling convenient and simple. Additionally, when a defective cell array is accommodated, it may be easy to replace the defective cell array with another cell array.

Additionally, according to still another aspect of the present disclosure, events resulting from thermal runaway in a vehicle including multiple battery packs, such as fire or explosion, may be prevented or delayed.

In addition, the present disclosure may have various other effects, which will be described in each embodiment, or descriptions of effects that may be easily inferred by those skilled in the art will be omitted.

### DESCRIPTION OF DRAWINGS

The accompanying drawings illustrate preferred embodiments of the present disclosure and together with the foregoing disclosure, serve to provide further understanding of the technical features of the present disclosure, and thus, the present disclosure is not construed as being limited to the drawing.
FIG. 1 is a perspective view of a battery pack according to an embodiment of the present disclosure, viewed from the front direction.
FIG. 2 is a perspective view of a battery pack according to an embodiment of the present disclosure, viewed from the rear direction.
FIG. 3 is an exploded perspective view showing a state in which a battery pack according to an embodiment of the present disclosure is separated.
FIG. 4 is a perspective view showing a pack case according to an embodiment of the present disclosure.
FIG. 5 is a front view showing a pack case according to an embodiment of the present disclosure.
FIG. 6 is a view showing a state in which cell arrays are being inserted into a pack case according to an embodiment of the present disclosure.
FIG. 7 is a view showing a state in which cell arrays are inserted into a pack case according to an embodiment of the present disclosure.
FIG. 8 is a view showing a state in which a plurality of pack cases are arranged according to an embodiment of the present disclosure.
FIG. 9 is a perspective view showing a plurality of pack cases and cell arrays according to an embodiment of the present disclosure.
FIG. 10 is a perspective view showing a pack case provided with venting valves according to an embodiment of the present disclosure.
FIG. 11 is an exploded perspective view showing a pack case provided with venting valves according to an embodiment of the present disclosure.
FIG. 12 is a front view showing a pack case provided with venting valves according to an embodiment of the present disclosure.
FIG. 13 is a perspective view showing a battery pack including a cap according to an embodiment of the present disclosure.
FIG. 14 is a perspective view showing a battery pack including a cap according to another embodiment of the present disclosure.
FIG. 15 is a perspective view showing a battery pack including a busbar assembly according to an embodiment of the present disclosure, viewed from the front.
FIG. 16 is a perspective view showing a battery pack including a busbar assembly according to another embodiment of the present disclosure, viewed from the rear.
FIG. 17 is a perspective view showing the lower surface of a pack case and a busbar assembly according to an embodiment of the present disclosure.
FIG. 18 is a view showing a busbar connector according to an embodiment of the present disclosure.
FIG. 19 is a view showing a busbar assembly disposed on the lower surface of a pack case according to an embodiment of the present disclosure, viewed from above.
FIG. 20 is a view showing a state in which a cell array and a busbar assembly are connected according to an embodiment of the present disclosure.
FIG. 21 is a view showing a portion of a battery pack including a front connector according to an embodiment of the present disclosure.
FIG. 22 is a perspective view showing a battery pack including a side member according to an embodiment of the present disclosure.
FIG. 23 is a perspective view showing a side member according to an embodiment of the present disclosure.
FIG. 24 is a front view showing a state in which a cell array is inserted into a pack case according to an embodiment of the present disclosure.
FIG. 25 is a perspective view showing a cell array according to an embodiment of the present disclosure.
FIG. 26 is a perspective view showing a cell array according to an embodiment of the present disclosure, viewed from below.
FIG. 27 is an exploded perspective view of a cell array according to an embodiment of the present disclosure.
FIG. 28 is a perspective view showing an absorbent member according to an embodiment of the present disclosure.
FIG. 29 is a perspective view showing an absorbent member according to another embodiment of the present disclosure.
FIG. 30 is a perspective view showing respective absorbent members mounted on cell arrays facing each other according to an embodiment of the present disclosure.
FIG. 31 is a side cross-sectional view showing a state in which cell arrays and absorbent members facing each other are coupled according to an embodiment of the present disclosure.
FIG. 32 is a schematic view of a vehicle including a battery pack according to an embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the embodiments described in this specification and the configurations shown in the drawings are only some of the most preferred embodiments of the present disclosure, not intended to entirely represent the technical aspects of the present disclosure, so it should be understood that various equivalents and modifications may be made thereto at the time of filing the present application.

Additionally, the present disclosure includes various embodiments. For each embodiment, duplicate descriptions of substantially identical or similar configurations will be omitted, and differences will be mainly described.

Additionally, to help understanding of the present disclosure, the accompanying drawings are not illustrated on an actual scale, but the dimensions of some components may be exaggerated. Additionally, the same reference numeral may be assigned to the same component in different embodiments.

Although the first, second, and the like are used to describe various components, it is obvious that these components are not limited by these terms. These terms are used only to distinguish one component from another component, and unless expressly stated to the contrary, it is obvious that the first component may be the second component.

Throughout the specification, unless expressly stated to the contrary, each component may be singular or plural.

Hereinafter, when any configuration is disposed on the "upper (or lower)" of a component or "top (or bottom)" of a component, it may mean not only that any configuration is disposed in contact with the upper surface (or lower surface) of the component, but also that other configuration may be interposed between the component and any configuration disposed above (or below) the component.

Additionally, when it is described that a component is "connected", "coupled", or "in contact" to another component, the components may be directly connected to or in contact with each other, but it should be understood that other components may be "interposed" between each component, or each component may be "connected", "coupled", or "in contact" through another component.

As used herein, singular expressions include plural expressions unless the context clearly indicates otherwise. In this application, the terms "comprising" or "including" should not be construed as necessarily including all of the various components or various steps described in the specification, but rather should be construed as not including some of the components or some of the steps, or as further including additional components or steps.

Throughout the specification, when referring to "A and/or B", it may mean A, B or A and B, unless expressly stated to the contrary.

Meanwhile, in this specification, unless otherwise specified, the Y-axis direction in which multiple cell arrays are stacked is referred to as the front-back direction, the X-axis direction, which is a horizontal direction orthogonal to the stacking direction of such cell arrays, is referred to as the left-right direction, and the Z-axis direction orthogonal to the X-Y plane is referred to as the upper-lower direction (vertical direction). Additionally, the left-right direction, the front-back direction, and the upper-lower direction may be expressed as the first direction, the second direction, and the third direction, respectively.

Meanwhile, terms indicating directions such as upper, lower, left, right, front, and rear may be used in the present disclosure, but these terms are only for convenience of description, and it is obvious to those skilled in the art that the terms may vary depending on the position, arrangement, or rotation of a reference object, or the position of an observer.

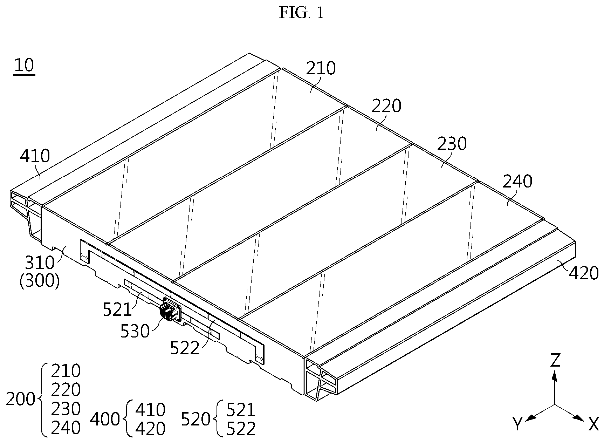

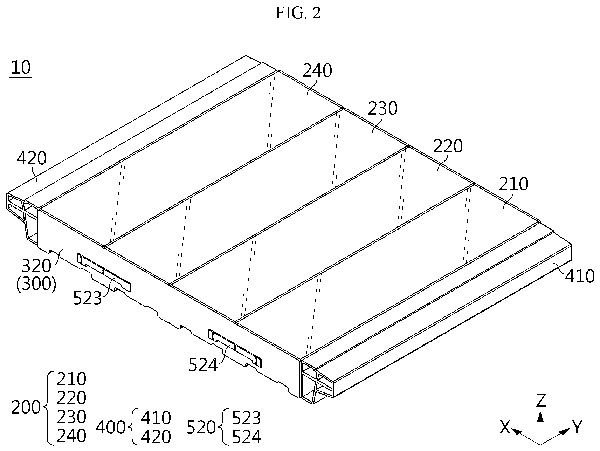

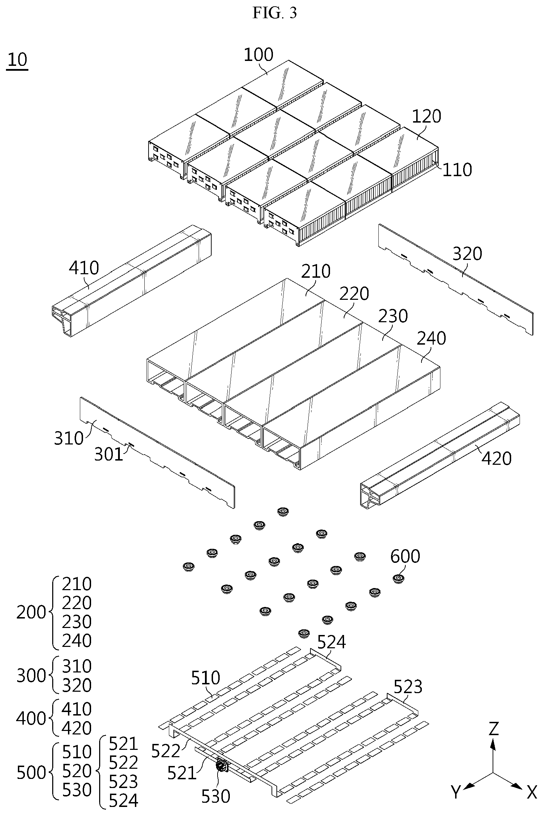

FIG. 1 is a perspective view of a battery pack 10 according to an embodiment of the present disclosure, viewed from the front direction (+Y-axis direction). FIG. 2 is a perspective view of a battery pack 10 according to an embodiment of the present disclosure, viewed from the rear direction (-Y-axis direction). FIG. 3 is an exploded perspective view showing a state in which a battery pack 10 according to an embodiment of the present disclosure is separated.

Referring to FIGS. 1 to 3, a battery pack 10 according to an embodiment of the present disclosure may include a cell array 100, a pack case assembly 200, a cap 300, a side member 400, a busbar assembly 500, and a venting valve 600.

The cell array 100 may include a plurality of battery cells 110. The cell array 100 may further include a module cover 120. At this time, according to an embodiment, the cell array 100 may be defined as a battery module.

The cell array 100 may be provided in plurality. The plurality of cell arrays 100 may be stacked on each other. The plurality of cell arrays 100 may be stacked in a horizontal direction. The cell array 100 may have various structures, and the plurality of cell arrays 100 may be stacked in various ways. The number and stacking method of the plurality of cell arrays 100 may be designed in various ways depending on the size of the battery accommodation space of the vehicle to which they are applied.

The pack case assembly 200 may have a form in which a plurality of pack cases 210 are arranged. The pack case 210 may be configured to accommodate at least one cell array 100. Specifically, an internal space is formed in the pack case 210, and the pack case 210 may be configured to accommodate the cell array 100 in the internal space. The pack cases 210 may be provided in plurality. The plurality of pack cases 210 may be disposed side by side in one direction.

According to an embodiment, the pack case assembly 200 may include a first pack case 210, a second pack case 220 disposed next to the first pack case 210, a third pack case 230 disposed next to the second pack case 220, and a fourth pack case 240 disposed next to the third pack case 230. In other words, the first pack case 210, the second pack case 220, the third pack case 230, and the fourth pack case 240 may be sequentially disposed in one direction (X-axis direction). However, the number of pack cases 210 constituting the pack case assembly 200 is not limited by the above embodiment, and may be designed in various ways depending on the size of the battery accommodation space in the vehicle.

The first pack case 210, the second pack case 220, the third pack case 230, and the fourth pack case 240 have substantially the same structure and shape, and for convenience of description, features encompassing the first pack case 210, the second pack case 220, the third pack case 230, and the fourth pack case 240 will be defined and described as the pack case 210.

At this time, according to an embodiment, the pack case assembly 200 may be directly mounted on the chassis of the vehicle, or the pack case assembly 200 may be the chassis of the vehicle itself. That is, the cell array 100 may be configured to be inserted and/or mounted directly on the vehicle chassis (e.g., the pack case assembly 200).

At this time, the cell array 100 may be configured to be inserted into the pack case 210 in the first direction (Y-axis direction), and a plurality of pack cases 210 may be configured to be connected in the second direction (X-axis direction) perpendicular to the first direction.

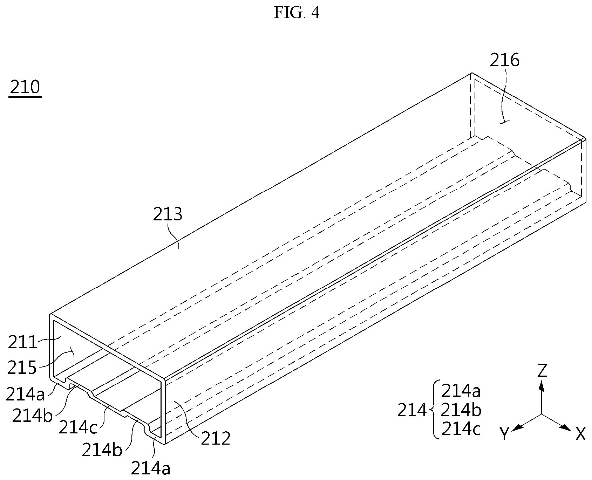

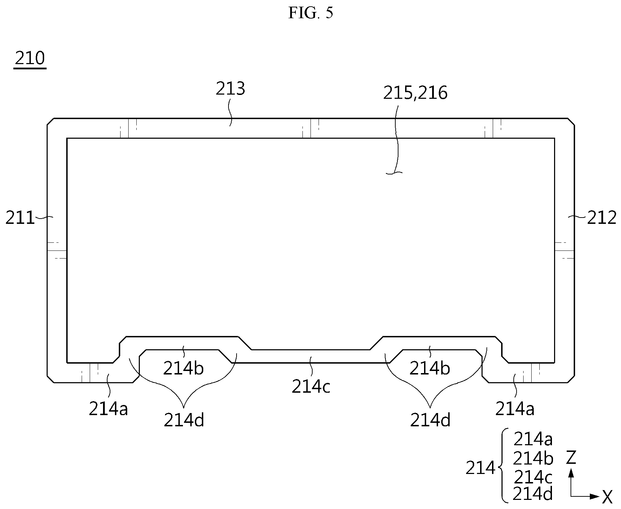

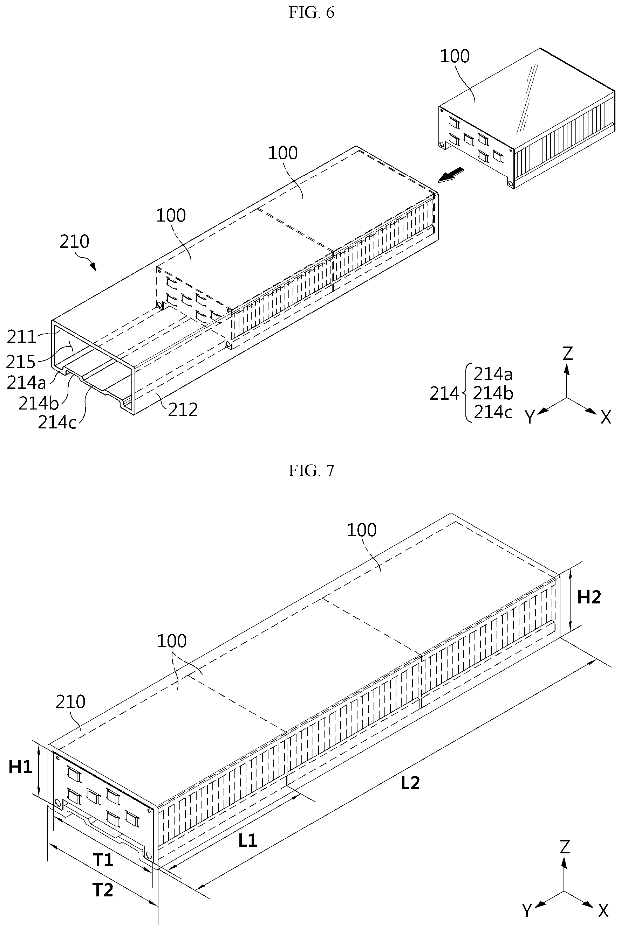

FIG. 4 is a perspective view showing a pack case 210 according to an embodiment of the present disclosure. FIG. 5 is a front view showing a pack case 210 according to an embodiment of the present disclosure. FIG. 6 is a view showing a state in which cell arrays 100 are being inserted into a pack case 210 according to an embodiment of the present disclosure. FIG. 7 is a view showing a state in which cell arrays 100 are inserted into a pack case 210 according to an embodiment of the present disclosure.

First, referring to FIG. 4, the pack case 210 may have opening portions 215, 216 formed on the front or rear surface. The embodiment exemplifies that the opening portions 215, 216 are formed on the front and rear surfaces of the pack case 210, respectively. The pack case 210 may have a rectangular tubular shape that is open in the front-back direction (e.g., the Y-axis direction in FIG. 4). For example, the pack case 210 may include a left plate 211 and a right plate 212 that cover one surface facing the left direction (e.g., the -X-axis direction in FIG. 4) and one surface facing the right direction (e.g., the +X-axis direction in FIG. 4), a lower plate 214 that covers one surface facing the lower direction (e.g., the -Z-axis direction in FIG. 4), and an upper plate 213 that covers one surface facing the upper direction (e.g., the +Z-axis direction in FIG. 4). And, the left plate 211, the right plate 212, the lower plate 214, and the upper plate 213 may be configured to be integral with each other. At this time, the pack case 210 may be open in the front-back direction. That is, the pack case 210 may include both a front opening portion 215 and a rear opening portion 216.

According to the above embodiment of the present disclosure, the cell array 100 may be accommodated in or removed from the internal space of the pack case 210 through the front opening portion 215 and/or the rear opening portion 216 of the pack case 210. Therefore, it is easy to assemble the cell array 100 into the pack case 210, and when a defective cell array 100 is accommodated, it may be easy to replace the defective cell array 100 with another cell array 100. Therefore, even in the CTC form, after-sales service (A/S) is possible.

According to another embodiment, although not illustrated in the drawing, the pack case 210 may be open in only one of the front direction (e.g., the +Y-axis direction in FIG. 4) and the rear direction (e.g., the -Y-axis direction in FIG. 4). For example, the pack case 210 may further include a rear plate (not shown) that covers one surface facing the rear direction. At this time, the front direction of the pack case 210 may be open. That is, the pack case 210 may include a front opening portion 215, and the cell array 100 may be accommodated in or removed from the internal space of the pack case 210 through the front opening portion 215.

According to still another embodiment, although not illustrated in the drawing, the pack case 210 may be provided as a U-frame. When the pack case 210 is provided as a U-frame, it may be provided to cover both side surfaces and the lower surface of the cell array 100. For example, the pack case 210 may include a left plate 211 and a right plate 212 that cover one surface facing the left direction of the cell array 100 and one surface facing the right direction, and a lower plate 214 that covers one surface facing the lower direction of the cell array 100. And, the left plate 211, the right plate 212, and the lower plate 214 may be configured to be integral with each other. At this time, the pack case 210 may be open in the upper direction and in the front-back direction (e.g., the Y-axis direction in FIG. 4).

At this time, the pack case 210 may further include a top plate (not shown). The top plate may be provided to form one surface facing the upper direction of the pack case 210. When the pack case 210 is provided as a U-frame, the top plate may be coupled in the open upper direction of the pack case 210. The top plate may be coupled to the U-frame of the pack case 210 by welding. However, the top plate may be omitted as needed. For example, the pack case 210 may be provided with an open upper side. However, the shape and/or structure of the pack case 210 is not limited by the above embodiment, and may be designed in various ways.

Referring to FIGS. 4 to 6, the lower plate 214 of the pack case 210 may form a step. That is, the lower plate 214 of the pack case 210 may be divided into regions based on the X-axis, and may have different heights depending on the region. The lower plate 214 of the pack case 210 may be divided into an edge portion 214a protruding downward, a center portion 214c positioned higher than the edge portion 214a, and a middle portion 214b positioned between the edge portion 214a and the center portion 214c and positioned higher than the center portion 214c.

The edge portion 214a, the center portion 214c, and the middle portion 214b have a flat plate shape in the horizontal direction, and connection portions 214d that connect the edge portion 214a, the center portion 214c, and the middle portion 214b therebetween and are formed to be inclined at a predetermined angle from the horizontal plane may be provided.

The edge portion 214a of the lower plate 214 has the lowest height among the lower plate 214 and thus may be in direct contact with the bottom surface of the vehicle. Additionally, the edge portion 214a is a portion protruding downward, and may guide the sliding movement of the cell array 100. The middle portion 214b of the lower plate 214 has the highest height among the lower plate 214 and thus may be configured to allow the cell array 100 to be seated thereon. The center portion 214c of the lower plate 214 may be configured to be coupled to a venting valve 600 to be described later.

The shape of the lower plate 214 may be symmetrical with respect to the X-axis. The center portion 214c of the lower plate 214 may be positioned at the center with respect to the X-axis. The middle portion 214b of the lower plate 214 may be composed of a plate extending leftward from the center portion 214c and a plate extending rightward. The edge portion 214a of the lower plate 214 may be composed of a plate extending leftward from the middle portion 214b and a plate extending rightward.

According to the above embodiment of the present disclosure, a step is formed in the lower plate 214 of the pack case 210, which may facilitate the accommodation and position fixing of the cell array 100. Additionally, when the venting valve 600 to be described later is mounted on the lower plate 214 (e.g., the center portion 214c) of the pack case 210, the venting valve 600 may be protected from external influences by preventing direct contact with one surface (e.g., the bottom surface of the vehicle) outside the pack case 210.

The pack case 210 may be made of a metal material having rigidity and heat resistance to physically or chemically protect the cell array 100 accommodated inside the pack case 210. For example, the pack case 210 may include at least one of an aluminum alloy, stainless steel, a titanium alloy, and an amorphous metal. For example, the pack case 210 may include an aluminum alloy.

According to the above embodiment of the present disclosure, each pack case 210 constituting the pack case assembly 200 forms an independent space and includes a thick and rigid material (e.g., aluminum), and thus the pack case 210 itself serves as a partition wall, thereby preventing heat transfer to the cell array within another adjacent pack case.

The pack case 210 may be formed by one or more of extrusion, forging, pressing, and casting. According to an embodiment, the pack case 210 may be formed by extrusion. For example, when the pack case 210 has a hollow structure including a front opening portion 215 and a rear opening portion 216, it may be formed into a rectangular tubular shape by extrusion. According to the above embodiment of the present disclosure, it may be efficient in producing a pack case 210 with a simple manufacturing process, a consistent shape, and a long extending length. Referring mainly to FIG. 6, the cell array 100 may be inserted into the pack case 210 in a first direction (Y-axis direction). The cell array 100 may be inserted into the pack case 210 only in the first direction. Unlike a typical conventional pack case, the pack case may be configured not to be inserted in a second direction (X-axis direction) perpendicular to the first direction. That is, the pack case 210 may be provided to allow a plurality of cell arrays 100 to be inserted therein along the first direction. For example, a plurality of cell arrays 100 may be inserted into the pack case 210 in the front-back direction through the front opening portion 215 and/or the rear opening portion 216 of the pack case 210. In other words, the pack case 210 may have a structure in which the cell arrays 100 are inserted in a row into the pack case 210.

The cell array 100 may be configured to slide into the pack case 210 through the front opening portion 215 and/or the rear opening portion 216. That is, a plurality of cell arrays 100 may be inserted into the pack case 210 in a sliding manner in the first direction. The cell arrays 100 may be inserted into the pack case 210 in a row. The cell arrays 100 inserted in a sliding manner may be in close contact with each other. The cell arrays 100 inserted into the pack case 210 may be configured to be in direct contact with each other without a predetermined gap.

Conventionally, battery modules are assembled by each being vertically mounted on the pack case, and clearance for assembly between the battery modules should be provided. According to the present disclosure, the cell arrays 100 may be assembled without clearance between the cell arrays 100 by inserting the cell arrays 100 into the pack case 210 in a row.

According to the above embodiment of the present disclosure, the cell array 100 may be inserted into the pack case 210 through sliding movement, thereby making assembly and coupling convenient and simple. Additionally, when a defective cell array 100 is accommodated, it may be easy to replace the defective cell array 100 with another cell array 100. Therefore, even in the CTC form, after-sales service is possible. Furthermore, the cell arrays 100 may be in close contact with each other, thereby maximizing energy density.

At this time, the number of cell arrays 100 inserted into the pack case 210 may be designed in various ways. For example, referring to FIGS. 6 and 7, three cell arrays 100 may be inserted into the pack case 210. That is, when N cell arrays 100 may be inserted in the Y-axis direction in consideration of the battery insertion space within the vehicle, the pack case 210 may be manufactured with a length allowing N cell arrays 100 to be inserted. The length of the pack case 210 is adjustable, thereby enabling a flexible size for each vehicle and thus allowing the battery pack 10 to be manufactured in flexible sizes.

Referring mainly to FIG. 7, the horizontal length (X-axis length) T2 of the pack case 210 may correspond to the horizontal length (X-axis length) T1 of the cell array 100. The horizontal length (X-axis length) T2 of the pack case 210 may be substantially the same as the horizontal length (X-axis length) T1 of the cell array 100, or may be formed to be slightly longer than the horizontal length (X-axis length) T1 of the cell array 100 to facilitate insertion and mounting.

The height (Z-axis length) H2 of the pack case 210 may correspond to the height (Z-axis length) H1 of the cell array 100. The height (Z-axis length) H2 of the pack case 210 may be substantially the same as the height (Z-axis length) H1 of the cell array 100, or may be formed to be slightly longer than the height (Z-axis length) H1 of the cell array 100 to facilitate insertion and mounting.

The vertical length (Y-axis length) L2 of the pack case 210 may correspond to N times (N: the number of cell arrays 100 inserted) the vertical length (Y-axis length) L1 of the cell array 100. The vertical length (Y-axis length) L2 of the pack case 210 may be substantially equal to N times the vertical length (Y-axis length) L1 of the cell array 100, or may be formed to be slightly longer than N times the vertical length (Y-axis length) L1 of the cell array 100 to facilitate insertion and mounting. For example, referring to FIG. 7, when three cell arrays 100 are configured to be inserted into the pack case 210, the vertical length (Y-axis length) L2 of the pack case 210 may be substantially equal to three times the vertical length (Y-axis length) L1 of the cell array 100.

According to the above embodiment of the present disclosure, the size and length of the pack case 210 are formed to correspond to the cell array 100, and may be formed to extend long in the first direction so that the cell array 100 may be inserted in the first direction. This simplifies the structure of the pack case 210 and allows for modularization of the pack case 210 for easier manufacturing. Such a modularized pack case 210 may be applicable to vehicles of various sizes.

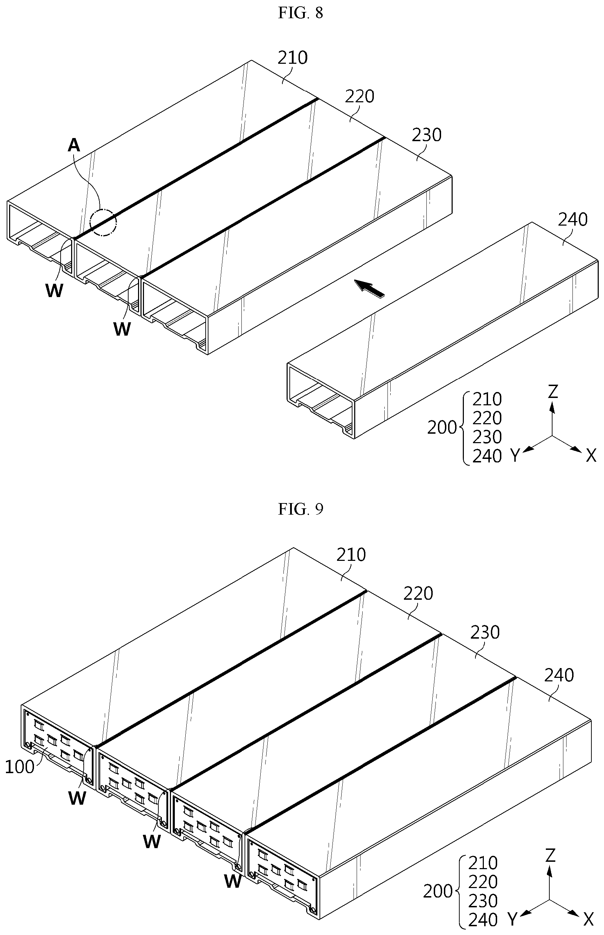

FIG. 8 is a view showing a state in which a plurality of pack cases 210 are arranged according to an embodiment of the present disclosure. FIG. 9 is a perspective view showing a plurality of pack cases 210 and cell arrays 100 according to an embodiment of the present disclosure.

The pack case 210 may be provided in plurality. The plurality of pack cases 210 may be configured to be connected in one direction. At this time, a configuration in which a plurality of pack cases 210 are arranged may be defined as a pack case assembly 200. The plurality of pack cases 210 may be configured to be connected in the second direction (X-axis direction) perpendicular to the first direction. The plurality of pack cases 210 may be stacked in the second direction.

At this time, the number of pack cases 210 constituting the pack case assembly 200 may be designed in various ways. That is, when M pack cases 210 (or cell arrays 100) may be inserted in the X-axis direction in consideration of the battery insertion space within the vehicle, the M pack cases 210 may be configured to be arranged. For example, referring to FIGS. 8 and 9, four pack cases 210 may be arranged. For example, the pack case assembly 200 may include a first pack case 210, a second pack case 220, a third pack case 230, and a fourth pack case 240. The first pack case 210, the second pack case 220, the third pack case 230, and the fourth pack case 240 may be arranged sequentially in the X-axis direction. The number of pack cases 210 is adjustable in this way, thereby enabling a flexible size for each vehicle and thus allowing the battery pack 10 to be manufactured in flexible sizes.

A plurality of pack cases 210 may be coupled and integrated. The plurality of pack cases 210 constituting the pack case assembly 200 may be configured to be coupled to each other by welding. For example, laser welding, ultrasonic welding, friction stir welding, or the like may be used, but various other coupling methods may be applied. The plurality of pack cases 210 arranged side by side may be configured to be welded together in a 1:1 ratio. Referring to the portion indicated by A in FIG. 8, the right plate 212 of the first pack case 210 and the left plate 211 of the second pack case 220 facing each other may be welded to each other. The welded portion W may extend long along both side plates of the pack case 210 in the Y-axis direction.

According to the above embodiment of the present disclosure, the length and size of the pack case assembly 200 may be configured to be expanded in the second direction by sequentially connecting the plurality of pack cases 210. Additionally, adopting a welding method may allow for convenient and simplified coupling and assembly. By coupling modularized pack cases 210, the size may be flexibly adjustable according to various sizes of the vehicle.

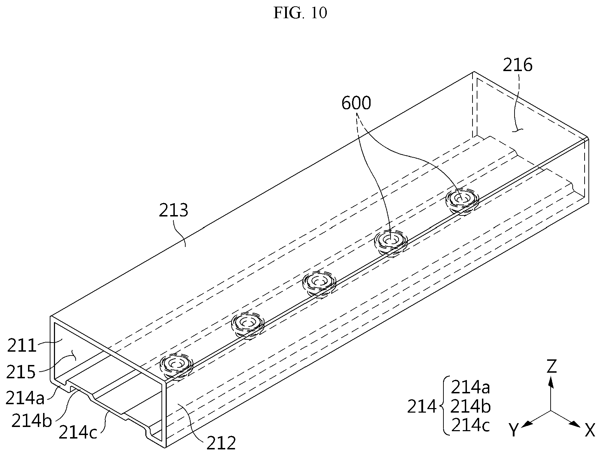

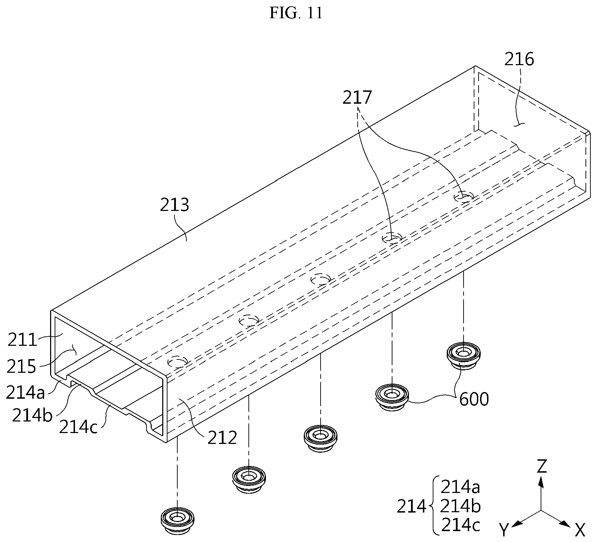

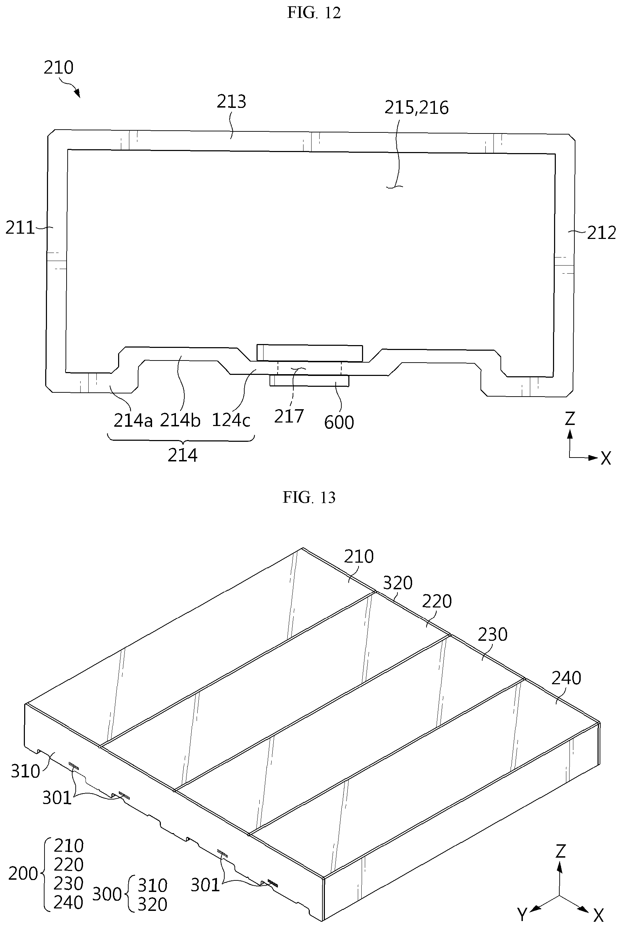

FIG. 10 is a perspective view showing a pack case 210 provided with venting valves 600 according to an embodiment of the present disclosure. FIG. 11 is an exploded perspective view showing a pack case 210 provided with venting valves 600 according to an embodiment of the present disclosure. FIG. 12 is a front view showing a pack case 210 provided with venting valves 600 according to an embodiment of the present disclosure.

Referring to FIGS. 10 to 12, the battery pack 10 may further include at least one venting valve 600 disposed to pass through at least one venting hole 217 formed on one surface of the pack case 210.

The venting valve 600 may be configured to pass through the lower plate 214 of the pack case 210. The venting valve 600 may be disposed to pass through the center portion 214c of the lower plate 214. A venting hole 217 may be formed in the center portion 214c of the lower plate 214 of the pack case 210. That is, the venting valve 600 may be coupled and fixed to the lower plate 214 by passing through the venting hole 217.

A plurality of venting valves 600 may be coupled within the pack case 210. For example, the plurality of venting valves 600 may be arranged in the Y-axis direction. The plurality of venting valves 600 may be disposed to be spaced apart at predetermined intervals. Likewise, a plurality of venting holes 217 may be provided, and the plurality of venting holes 217 may be arranged in the Y-axis direction to correspond to the positions of the venting valves 600. For example, referring to FIG. 11, five venting valves 600 may be coupled to one pack case 210, and five venting holes 217 may be formed.

Conventionally, the pack case was configured to vent venting gas toward the side, and thus, when the venting gas was discharged toward internal parts of the vehicle, there was a problem in the stability of other parts. According to the above embodiment of the present disclosure, it is possible to induce venting gas or the like generated by a thermal event to be discharged downward from the battery pack 10 so as not to be obstructed or blocked by structures such as the vehicle body or chassis provided adjacent to the battery pack 10.

Therefore, before thermal energy accumulates due to discharged material inside the battery pack 10, venting gas or the like may be smoothly and quickly discharged to the outside of the vehicle. As the pressure and thermal energy inside the battery pack 10 are efficiently discharged, the chain reaction of heat transfer propagating to the neighboring cell array 100 may be delayed, thereby enhancing safety.

The venting valve 600 is disposed adjacent to the battery cell 110 and/or the electrode lead 111, thereby minimizing the heat transfer phenomenon to adjacent battery cells 110. The edge portion 214a of the lower plate 214 has the lowest height among the lower plate 214, and may be in direct contact with the bottom surface of the vehicle. At this time, the center portion 214c to which the venting valve 600 is coupled has a higher height than the edge portion 214a, thereby preventing the venting valve 600 from directly contacting the bottom surface of the vehicle. Accordingly, the venting valve 600 may be prevented from being damaged by direct contact with the bottom surface of the vehicle.

The middle portion 214b of the lower plate 214 has the highest height among the lower plate 214 and thus may be configured to allow the cell array 100 to be seated thereon. The center portion 214c has a lower height than the middle portion 214b, thereby preventing the cell array 100 from being lifted by the venting valve 600.

According to the present disclosure, when thermal runaway occurs in the battery cell 110, gas or flame generated inside the battery cell 110 may be discharged to the outside of the cell array 100 through the lower portion of the battery cell 110. Specifically, directional venting may be induced downward from the cell array 100. The gas or flame generated in the battery cell 110 is not discharged through the upper portion of the battery cell 110 and may be directly discharged through the venting valve 600 positioned at the lower portion of the battery cell 110 adjacent to the battery cell 110, thereby enhancing safety. Cooling of the battery cell 110 may be performed at the upper end opposite to the venting valve 600, thereby avoiding interference with downward venting.

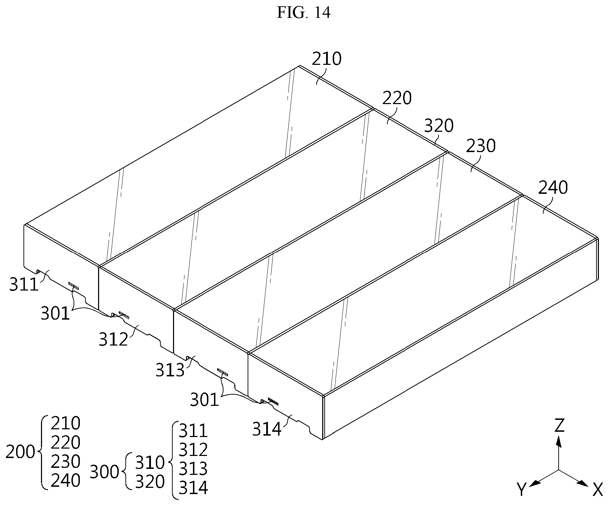

FIG. 13 is a perspective view showing a battery pack 10 including a cap 300 according to an embodiment of the present disclosure. FIG. 14 is a perspective view showing a battery pack 10 including a cap 300 according to another embodiment of the present disclosure.

The battery pack 10 may further include a cap 300 configured to cover the opening portions 215, 216 of the pack case 210. That is, the cap 300 may cover one surface facing the front and/or rear surfaces of the pack case 210. According to an embodiment, a front opening portion 215 and a rear opening portion 216 are formed in the pack case 210, and the cap 300 may include a front cap 310 configured to cover the front opening portion 215 and a rear cap 320 configured to cover the rear opening portion 216.

The shape of the cap 300 may be substantially the same as the front shape of the pack case assembly 200. That is, the cap 300 may be configured to cover a plurality of openings 215 or 216 of a plurality of pack cases 210 constituting the pack case assembly 200 at once. The horizontal length (X-axis length) of the cap 300 may be substantially the same as the horizontal length (X-axis length) of the pack case assembly 200. For example, referring to FIG. 13, when the pack case assembly 200 are composed of four pack cases 210, the horizontal length (X-axis length) of the cap 300 may be substantially equal to four times the horizontal length (X-axis length) of the pack case 210. The height (Z-axis length) of the cap 300 may be substantially the same as the height (Z-axis length) of the pack case assembly 200 (pack case 210). The lower surface of the cap 300 may have a vertically protruding or concave shape, like the lower plate 214 of the pack case 210.

The cap 300 may include a plurality of holes 301. The number of holes 301 formed in the cap 300 may correspond to the number of pack cases 210 constituting the pack case assembly 200. For example, referring to FIG. 13, when the pack case assembly 200 are composed of four pack cases 210, four holes 301 may be disposed to be spaced apart from each other in the X-axis direction. Additionally, each hole 301 may be formed at a position corresponding to an opening portion 215 or 216 of each pack case 210. Specifically, each hole 301 may be formed at a position corresponding to a busbar connector 520 connected to each pack case 210. The busbar connector 520 connected to each pack case 210 may pass through the hole 301 to be connected to the outside of the pack case 210.

The cap 300 may be configured to be attached to and detached from the pack case 210. According to an embodiment, the cap 300 may include an adhesive provided on the edge portion in contact with the pack case 210. At this time, the adhesive strength of the adhesive is appropriately about 0.1 gf/25 mm to 500 gf/25 mm, and more preferably 1 gf/25 mm to 100 gf/25 mm. This is smaller than the adhesive strength of a typical adhesive of 1,500 gf/25 mm, thereby distinguishing it from a typical adhesive and enabling easy attachment and detachment. However, the configuration of the cap 300 is not limited by the above embodiment, and if the cap 300 is configured to be attached to and detached from the pack case 210, it may be designed in various ways.

According to the above embodiment of the present disclosure, the cap 300 covers the front and rear surfaces of the pack case 210, thereby reinforcing the structural rigidity of the cell array 100 and preventing venting gas from being transferred to another pack case 210 through the front or rear surface of the pack case 210. The cap 300 may be attached to and detached from the pack case 210, thereby allowing for simple separation from the pack case 210 and facilitating easy replacement of the cell array 100 within the pack case 210.

According to another embodiment, referring to FIG. 14, the front cap 310 and the rear cap 320 may include a plurality of caps 300 configured to cover a plurality of pack cases 210, respectively. That is, the caps 300 may individually cover the opening portions 215 or 216 of the pack case 210. For example, referring to FIG. 14, the front cap 310 may include a first front cap 311 covering the first pack case 210, a second front cap 312 covering the second pack case 220, a third front cap 313 covering the third pack case 230, and a fourth front cap 314 covering the fourth pack case 240. The rear cap 320 may be composed of four caps in the same manner.

At this time, the shape of the cap 300 may be substantially the same as the front shape of the pack case 210. The horizontal length (X-axis length) of the cap 300 may be substantially the same as the horizontal length (X-axis length) of the pack case 210. The height (Z-axis length) of the cap 300 may be substantially the same as the height (Z-axis length) of the pack case assembly 200 (pack case 210). The lower surface of the cap 300 may have a protruding structure and a concave structure formed in the same manner as the lower plate 214 of the pack case 210.

The cap 300 may include at least one hole 301. The hole 301 may be formed at a position corresponding to the opening portion of the pack case 210. Specifically, the hole may be formed at a position corresponding to a busbar connector 520 connected to the pack case 210. The busbar connector 520 connected to the pack case 210 may pass through the hole 301 to be connected to the outside of the pack case 210.

According to the above embodiment of the present disclosure, individual caps 300 covering each pack case 210 may be provided, thereby allowing for individual attachment and detachment. This allows only the cap 300 of the pack case 210 having the cell array 100 requiring replacement to be attached and detached. Additionally, standardized caps 300 may be manufactured in batches without adjusting the length or number of holes 301 according to the vehicle size, thereby being effective for mass production and cost reduction and having the advantage of parts commonization.

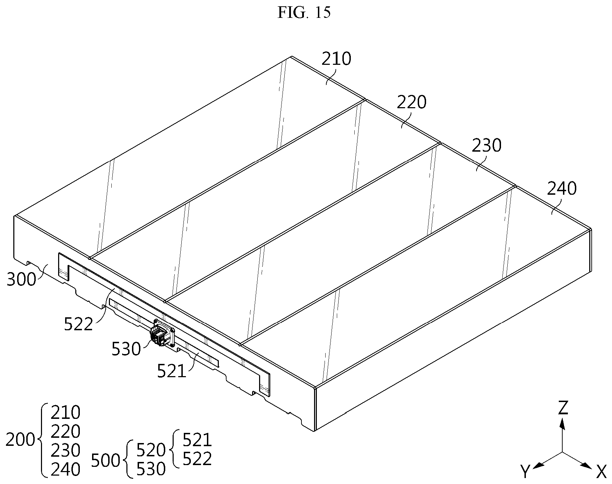

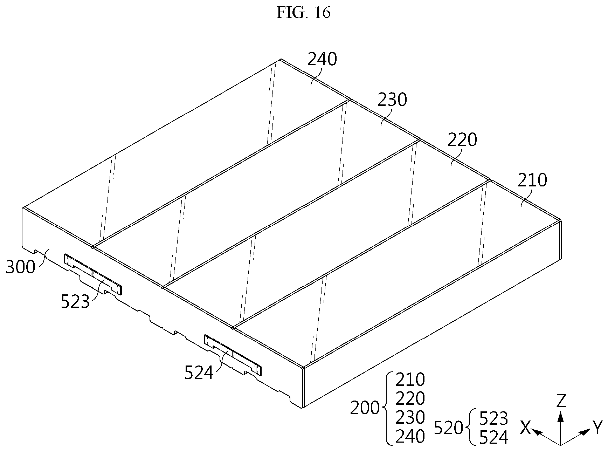

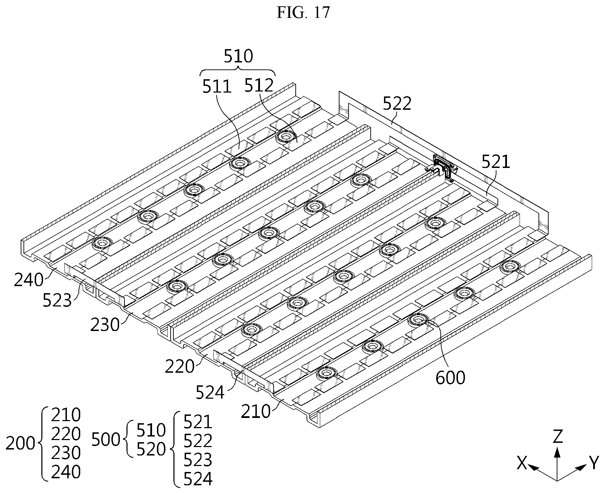

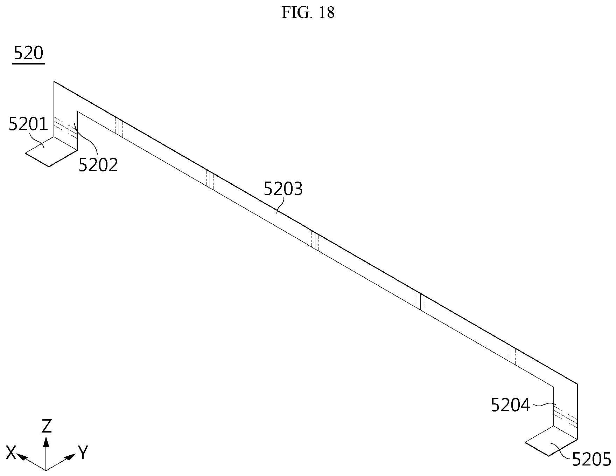

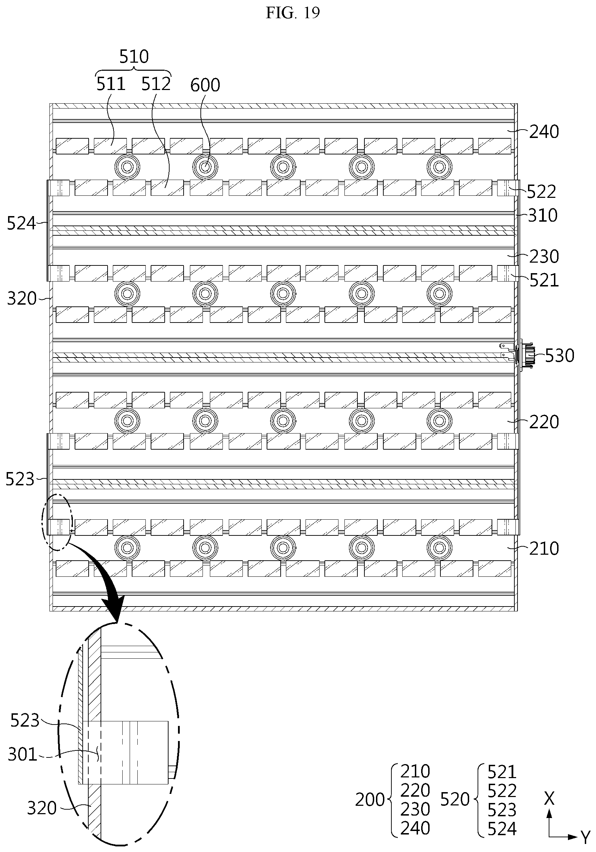

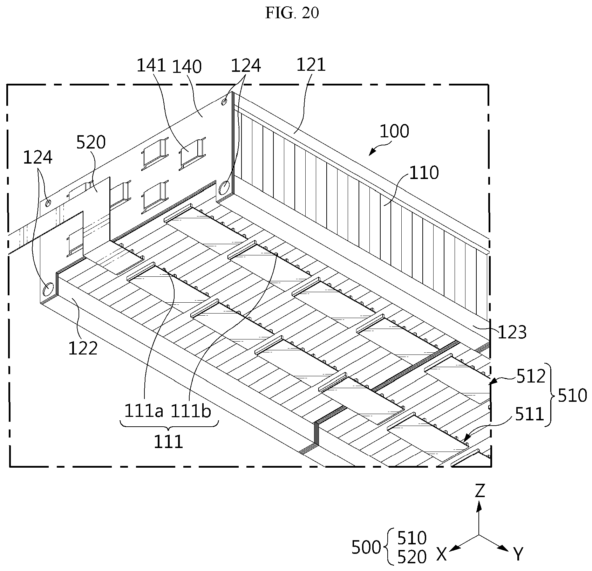

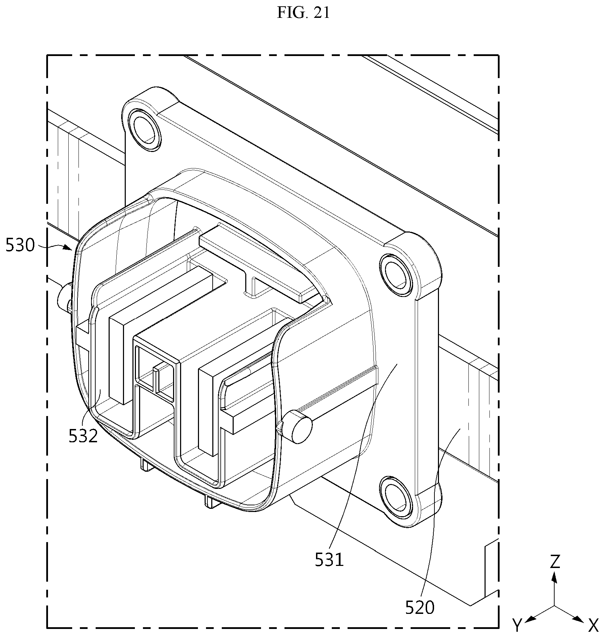

FIG. 15 is a perspective view showing a battery pack 10 including a busbar assembly 500 according to an embodiment of the present disclosure, viewed from the front. FIG. 16 is a perspective view showing a battery pack 10 including a busbar assembly 500 according to an embodiment of the present disclosure, viewed from the rear. FIG. 17 is a perspective view showing the lower surface of a pack case and a busbar assembly 500 according to an embodiment of the present disclosure. FIG. 18 is a view showing a busbar connector 520 according to an embodiment of the present disclosure. FIG. 19 is a view showing a busbar assembly 500 disposed on the lower surface of a pack case according to an embodiment of the present disclosure, viewed from above. FIG. 20 is a view showing a state in which a cell array 100 and a busbar assembly 500 are connected according to an embodiment of the present disclosure. FIG. 21 is a view showing a portion of a battery pack 10 including a front connector 530 according to an embodiment of the present disclosure.

FIGS. 17 and 19 are views in which the remaining portions except for the lower plate 214 of the pack case 210 are omitted for convenience of description.

The busbar assembly 500 may be configured to be electrically connected to the electrode lead 111 of the battery cell 110. The busbar assembly 500 may be configured to allow the electrode leads 111 of the plurality of battery cells 110 to be connected to each other. More specifically, the busbar assembly 500 may be configured to support the electrode leads 111, facilitate the interconnection of the electrode leads 111, and enable sensing of voltage or the like from the electrode leads 111. The busbar assembly 500 may be configured to enable high voltage connection.

The busbar assembly 500 may include a busbar terminal 510, a busbar connector 520, and a front connector 530. The busbar terminal 510 may electrically connect two or more electrode leads 111. The busbar terminal 510 may electrically connect two or more electrode leads 111 within one pack case 210.

Referring to FIG. 20, each battery cell 110 may include an electrode lead 111. The electrode lead 111 of the battery cell 110 includes a positive electrode lead 111a and a negative electrode lead 111b, and the positive electrode lead 111a and the negative electrode lead 111b may be disposed to be spaced apart from each other on the lower surface of the battery cell 110. The electrode lead 111 may be provided to protrude downward from the lower surface of the battery cell 110. The specific structure and configuration of the battery cell will be described later.

The busbar terminal 510 is positioned at the lower portion of the battery cell 110 where the electrode lead 111 of the battery cell 110 is positioned, and may be configured to be coupled to the electrode lead 111. The busbar terminal 510 may be positioned between the lower portion of the battery cell 110 and the lower plate 214 of the pack case 210. The busbar terminal 510 may be in vertical contact with the plurality of electrode leads 111 and may be coupled and fixed to the plurality of electrode leads 111. At this time, the coupling and fixing method between the electrode lead 111 and the busbar terminal 510 may use methods such as laser welding or ultrasonic welding.

According to another embodiment, although not illustrated in the drawing, a slit hole (not shown) may be formed in the busbar terminal 510, and the electrode lead 111 may be inserted and welded through the slit hole. However, the coupling and fixing method between the electrode lead 111 and the busbar terminal 510 is not limited by the above embodiment, and various other fastening methods may be applied.

The busbar terminal 510 may be coupled to a plurality of electrode leads 111 arranged along the first direction (Y-axis direction), which is the stacking direction of the battery cells 110. For example, referring to FIG. 20, the busbar terminal 510 may be connected to six electrode leads 111. However, the number of electrode leads 111 to which the busbar terminal 510 may be connected is not limited by the above embodiment, and may be designed in various ways.

The plurality of busbar terminals 510 may be aligned along the first direction (Y-axis direction), which is the stacking direction of the battery cells 110. The pack case 210 may be provided with positive electrode busbar terminals 511 connecting a plurality of positive electrode leads 111a and negative electrode busbar terminals 512 connecting a plurality of negative electrode leads 111b. The positive electrode busbar terminals 511 and the negative electrode busbar terminals 512 may be aligned along the first direction (Y-axis direction), respectively.

At this time, the positive electrode busbar terminal 511 and the negative electrode busbar terminal 512 may connect the electrode leads 111 of different battery cells 110. That is, the positive electrode busbar terminal 511 may couple the electrode leads 111 from the first to sixth battery cells 110, and the negative electrode busbar terminal 512 may couple the electrode leads 111 from the fourth to ninth battery cells 110. According to the above embodiment of the present disclosure, all battery cells 110 accommodated within the pack case 210 may be electrically connected.

The busbar terminal 510 may include a metal such as copper. The busbar terminal 510 may have a thin and flat plate shape. For example, the busbar terminal 510 may have a rectangular shape.

The busbar connector 520 may electrically connect busbar terminals 510 disposed within different pack cases (e.g., 210, 220). That is, one end and the other end of the busbar connector 520 may be disposed within different pack cases (e.g., 210, 220).

The busbar connectors 520 may be provided in plurality. For example, referring to FIG. 17, the busbar connector 520 may include a first connector 521 connecting the busbar terminal 510 of the second pack case 220 and the busbar terminal 510 of the third pack case 230, a second connector 522 connecting the busbar terminal 510 of the first pack case 210 and the busbar terminal 510 of the fourth pack case 240, a third connector 523 connecting the busbar terminal 510 of the third pack case 230 and the busbar terminal 510 of the fourth pack case 240, and a fourth connector 524 connecting the busbar terminal 510 of the first pack case 210 and the busbar terminal 510 of the second pack case 220. According to the above embodiment of the present disclosure, the busbar terminals 510 constituting the pack case assembly 200 may all be electrically connected.

Referring to FIG. 18, the busbar connector 520 may include a plurality of bent portions. For example, the busbar connector 520 may include a first portion 5201 positioned below the battery cell 110 and extending in the first direction (Y-axis direction), a second portion 5202 extending in the vertical direction (+Z-axis direction) from the first portion 5201, a third portion 5203 extending in the second direction (X-axis direction) from the second portion 5202, a fourth portion 5204 extending in the vertical direction (-Z-axis direction) again from the third portion 5203, and a fifth portion 5205 extending in the first direction (Y-axis direction) from the fourth portion 5204.

Referring mainly to the enlarged view of FIG. 19, the busbar connector 520 may be configured to pass through the hole 301 formed in the cap 300 to be connected on the outside of the cap. That is, the middle portion of the busbar connector 520 may be disposed in the outward direction of the cap 300, and the edge portion may be disposed in the inward direction of the cap 300. For example, the first portion 5201 and the fifth portion 5205 of the busbar connector 520 may be disposed approximately in the inward direction of the cap 300, and the first portion 5201 and the fifth portion 5205 may pass through the hole 301 formed in the cap 300. Additionally, the second portion 5202, the third portion 5203, and the fourth portion 5204 of the busbar connector 520 may be disposed in the outward direction of the cap 300. The second portion 5202, the third portion 5203, and the fourth portion 5204 may be disposed in parallel with the cap 300. According to an embodiment, the second portion 5202, the third portion 5203, and the fourth portion 5204 may be in contact with the cap 300.

According to the above embodiment of the present disclosure, the busbar connector 520 is configured to be connected externally, and thus, when a thermal event occurs, the chain reaction of heat transfer propagating to the neighboring pack case 210 through the busbar connector 520 may be prevented, thereby enhancing safety.

The front connector 530 may be configured to be connected to one or more electrode leads 111 and transmit sensing information to a control unit such as a battery management system (BMS). The front connector 530 may be disposed on the busbar connector 520. The front connector 530 may be electrically connected to the busbar connector 520. For example, the front connector 530 may be disposed on the first connector 521 and electrically connected to the first connector 521.

The front connector 530 may be disposed to pass through the cap 300. The front connector 530 may include a plate portion 531 disposed on the cap 300, a connector portion 532 protruding toward the front of the plate portion 531 and configured to be connected to external components (e.g., a control unit such as a BMS), and a fixing portion (not shown) configured to be coupled and fixed to the pack case 210. At this time, the plate portion 531 is configured to be coupled and fixed to the cap 300, and may be disposed on the outside of the cap 300. The connector portion 532 may be disposed on the outside of the cap 300. The fixing portion may pass through the cap 300 to be seated on one surface within the pack case 210. The plate portion 531 may be coupled and fixed by means of bolts and screws. However, the coupling and fixing method is not limited by the above embodiment, and may be designed in various ways.

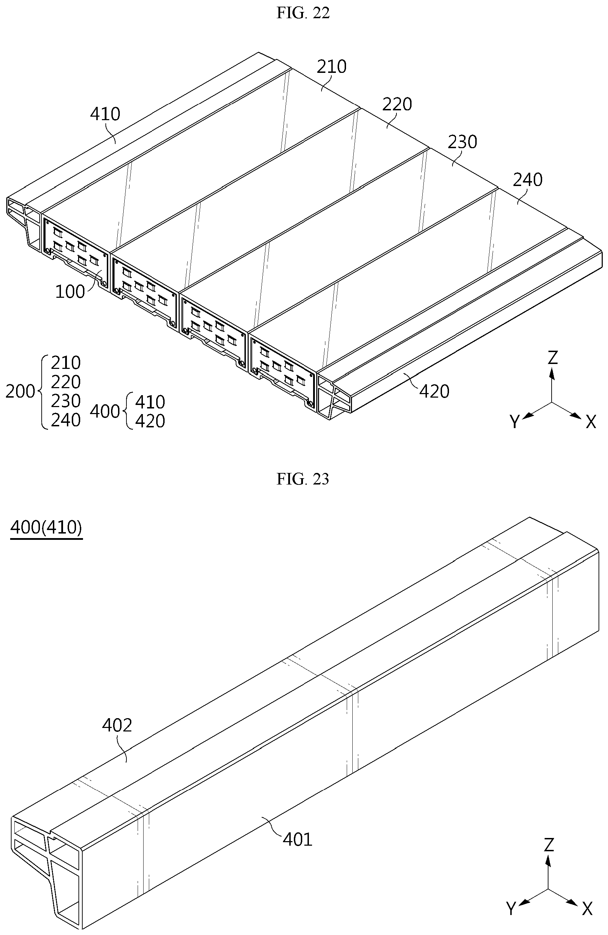

FIG. 22 is a perspective view showing a battery pack 10 including a side member 400 according to an embodiment of the present disclosure. FIG. 23 is a perspective view showing a side member 400 according to an embodiment of the present disclosure.

The battery pack 10 may further include a side member 400. The side member 400 may be configured to be directly coupled to the pack case assembly 200.

The side member 400 may be directly coupled to both sides of the pack case assembly 200. The side member 400 may include a first side member 410 disposed on the left side of the pack case assembly 200 and a second side member 420 disposed on the right side of the pack case assembly 200.

Referring to FIG. 23, the side member 400 may include a first side surface 401 configured to contact one surface of the pack case 210 and a second side surface 402 configured to be coupled to the frame of the vehicle. At this time, according to an embodiment, the side member 400 may be directly connected to the chassis of the vehicle. According to another embodiment, the side member 400 may be the chassis of the vehicle. That is, the side member 400 may be the chassis of the vehicle itself.

In general, a battery module is accommodated in a battery pack 10 and the battery pack 10 is assembled to the vehicle chassis, but this increases the number of unnecessary parts and is disadvantageous in terms of space utilization and energy efficiency. According to the above embodiment of the present disclosure, the side member 400 may be directly coupled to the vehicle chassis, or itself may be utilized as the vehicle chassis. This may increase energy density, improve space utilization, and reduce costs while maintaining the structure and size of the vehicle.

And, by adjusting the length and number of pack cases 210, the pack case assembly 200 has a flexible size for each vehicle, while the side member 400 has the advantage of parts commonization.

The side member 400 may be coupled to pack cases (e.g., 210, 240) positioned at the edge of the pack case assembly 200. For example, referring to FIG. 22, the first side member 410 may be coupled to the first pack case 210, and the second side member 420 may be coupled to the fourth pack case 240.

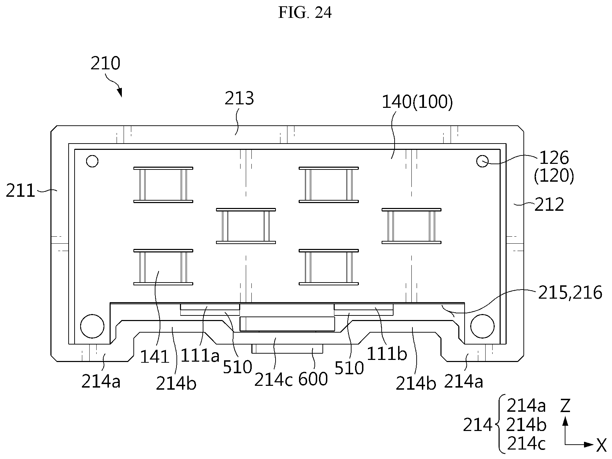

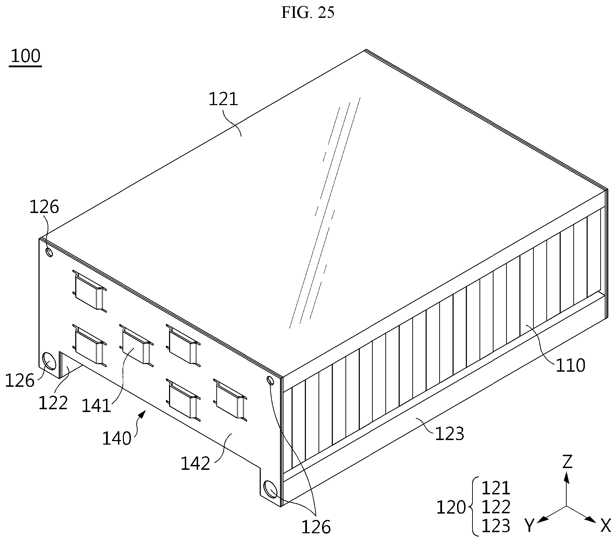

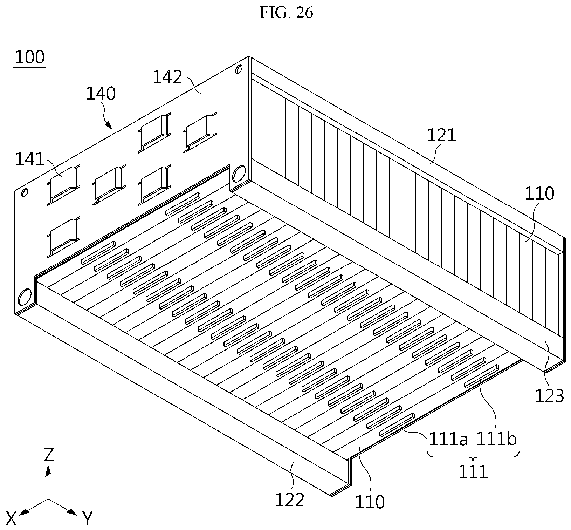

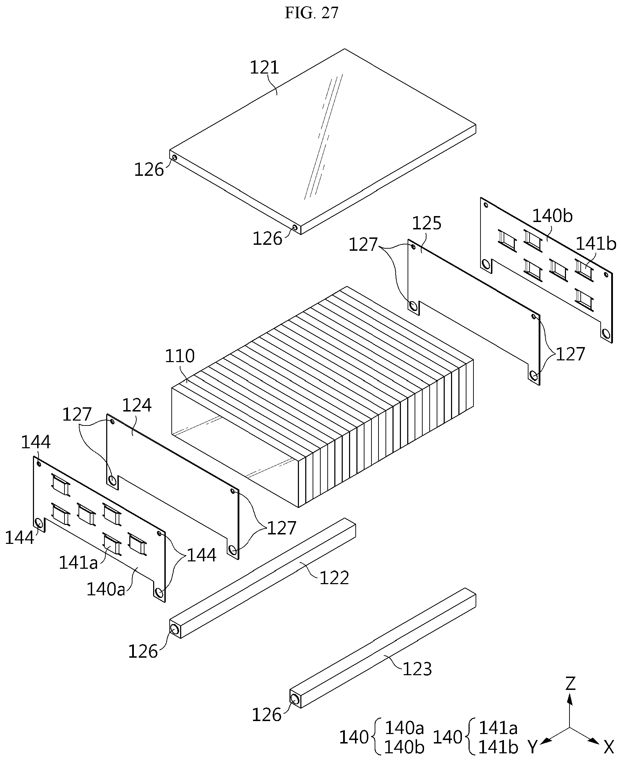

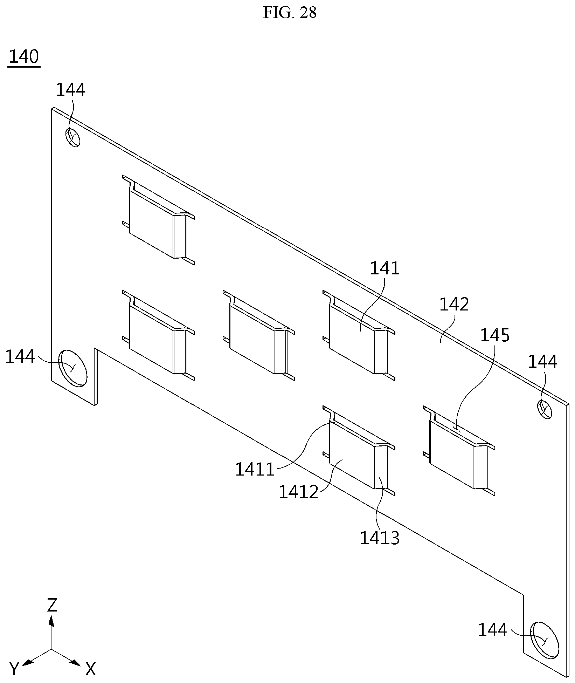

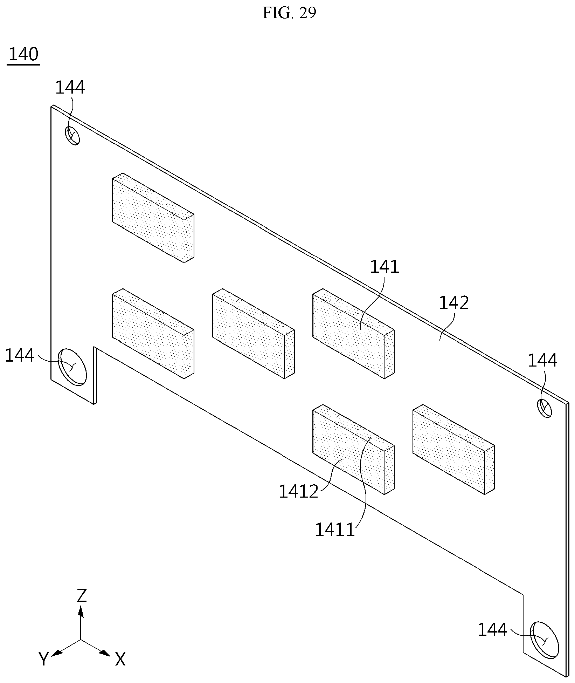

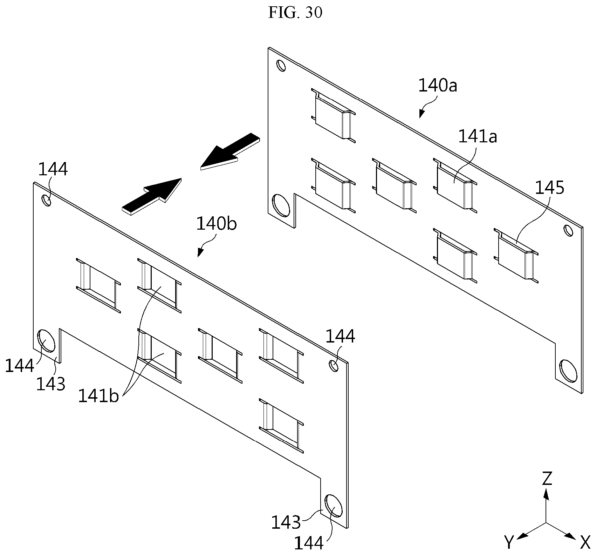

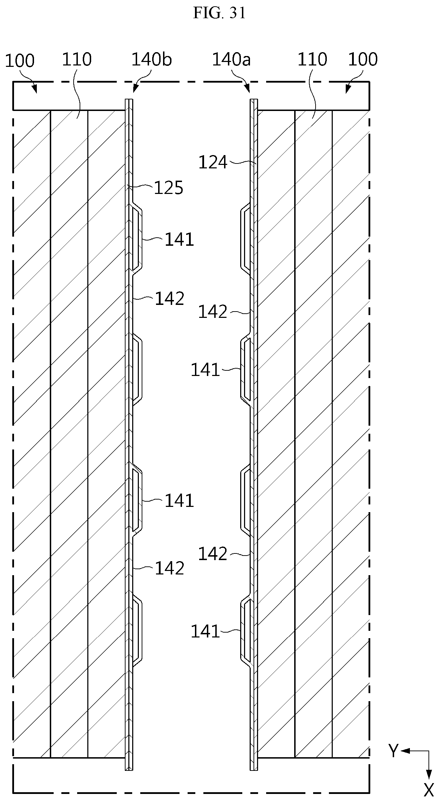

FIG. 24 is a front view showing a state in which a cell array 100 is inserted into a pack case 210 according to an embodiment of the present disclosure. FIG. 25 is a perspective view showing a cell array 100 according to an embodiment of the present disclosure. FIG. 26 is a perspective view showing a cell array 100 according to an embodiment of the present disclosure, viewed from below. FIG. 27 is an exploded perspective view of a cell array 100 according to an embodiment of the present disclosure. FIG. 28 is a perspective view showing an absorbent member 140 according to an embodiment of the present disclosure. FIG. 29 is a perspective view showing an absorbent member 140 according to another embodiment of the present disclosure. FIG. 30 is a perspective view showing respective absorbent members 140 mounted on cell arrays 100 facing each other according to an embodiment of the present disclosure. FIG. 31 is a side cross-sectional view showing a state in which cell arrays 100 and absorbent members 140 facing each other are coupled according to an embodiment of the present disclosure.

Referring to FIGS. 24 to 31, the cell array 100 may include a battery cell 110, a module cover 120, and an absorbent member 140.

The battery cell 110 may have various types. For example, the battery cell 110 may include at least one of a pouch-type battery cell, a cylindrical battery cell, and a prismatic battery cell. However, for convenience of description, the following description will focus on the case where the battery cell 110 is a pouch-type battery cell.

The battery cells 110 may be provided in plurality. The plurality of battery cells 110 may be stacked on each other. The battery cell 110 may have various structures, and the plurality of battery cells 110 may be stacked in various ways. A pad may be included between the battery cells 110 to prevent movement of the battery cells. The pad may perform substantially the same function as the absorbent member 140.

The battery cell 110 may have a structure in which a plurality of unit cells arranged in the order of a positive electrode plate, a separator, and a negative electrode plate, or a plurality of bi-cells arranged in the order of a positive electrode plate, a separator, a negative electrode plate, a separator, a positive electrode plate, a separator, and a negative electrode plate are stacked according to the battery capacity.

Electrode leads 111 may be provided in the battery cell 110. The electrode lead 111 is a type of terminal exposed to the outside and connected to an external device, and may be made of a conductive material. The electrode lead 111 may include a positive electrode lead 111a and a negative electrode lead 111b.

The electrode lead 111 may be provided to protrude downward from the lower surface of the battery cell 110. The positive electrode lead 111a and the negative electrode lead 111b may be disposed to be spaced apart from each other on the lower surface of the battery cell 110. The positive electrode lead 111a and the negative electrode lead 111b may each be electrically connected to the busbar terminal disposed on the lower side of the battery cell 110. However, the position and shape of the electrode lead 111 are not limited by the above embodiment, and may be designed in various ways.

High-temperature gas, flame, spark, or the like generated during thermal runaway in the battery cell 110 are highly likely to be ejected to the portion where the corresponding electrode lead 111 is positioned (e.g., the lower portion of the battery cells 110). According to the embodiment of the present disclosure, the electrode leads 111 are provided on the lower side, thereby inducing directional venting so that venting gas or the like is vented downward when a thermal event occurs.

At this time, the electrode lead 111 and the venting valve 600 may be disposed adjacent to each other. Therefore, the venting gas or the like vented downward may be quickly discharged to the outside of the battery pack 10 through the venting valve 600 disposed at the lower portion. Heat transfer within the pack case 210 or between pack cases 210 may be prevented by minimizing the path where the venting gas or the like moves within the pack case 210 to the venting valve 600

The module cover 120 may be configured to protect and/or support the battery cells 110. A plurality of battery cells 110 may be stacked and accommodated in the module cover 120. The module cover 120 surrounds at least a portion of the plurality of battery cells 110, thereby protecting the battery cells 110 from external vibration or shock.

The module cover 120 may further include a top cover 121 covering the battery cells 110 from above, a front cover 124 covering them from the front, and a rear cover 125 covering them from the rear. The front cover 124 and the rear cover 125 cover the front and rear of the battery cells 100 within the cell array 100, thereby supplementing structural rigidity and responding to swelling of the battery cells 100.

The module cover 120 may include support members 122, 123 supporting the battery cells 110 at the lower end thereof. However, the support members 122, 123 may be configured such that at least a portion of the lower portion of the battery cells 110 is not covered, and at least a portion of the lower portion of the battery cells 110 is exposed to the outside. In other words, the electrode leads 111 disposed on the lower surface of the battery cells 110 may not be covered by the module cover 120.

According to the above embodiment of the present disclosure, at least a portion of the lower portion of the battery cells 110 is exposed, and thus, when thermal runaway occurs in the battery cells 110, gas or flame generated inside the battery cells 110 may be discharged to the outside of the cell array 100 through the lower portion of the battery cells 110. Specifically, directional venting may be induced to the lower side of the cell array 100.

The support members 122, 123 may be composed of a first bar 122 and a second bar 123 supporting the battery cells 110 at lower ends of both sides (left and right). The first bar 122 and the second bar 123 may have a bar shape extending long in the first direction (Y-axis direction). The first bar 122 and the second bar 123 may be disposed on the left and right sides of the battery cell 110, respectively. That is, the battery cell 110 may be seated on the first bar 122 and the second bar 123.

According to another embodiment, although not illustrated in the drawing, the module cover 120 may include a bottom cover that covers the battery cell 110 from the lower side and has an opening formed at the central portion excluding the edge portion.

The front cover 124 and the rear cover 125 may be configured to cover all of the top cover 121, the battery cell 110, and the support members 122, 123. For example, referring to FIG. 27, the front cover 124 and the rear cover 125 may have a shape that includes portions protruding downward to correspond to the position and shape of the support members 122, 123 on the rectangular plate. In other words, the lower surfaces of the front cover 124 and the rear cover 125 may have a shape in which the edge portions protrude and the middle portions are concave. Additionally, referring to FIG. 24, the protruding edge portions of the front cover 124 and the rear cover 125, that is, the portions where the first bar 122 and the second bar 123 are positioned, may be configured to be inserted into the edge portion 214a of the pack case 210 and slide. The middle portion of the front cover 124 and the rear cover 125 may be inserted into the middle portion 214b and the center portion 214c.

According to the above embodiment of the present disclosure, the cell array 100 may be guided to slide inside the pack case 210. Additionally, the cell array 100 may be prevented from moving inside the pack case 210 and the position of the cell array 100 may be fixed.

The structure and shape of the module cover 120 supporting the battery cells 110 are not limited to the above embodiment, and some components of the module cover 120 may be removed to reduce the weight and volume of the module cover 120.

In this way, the module cover 120 may be configured to minimize the weight and volume of the module cover 120 while minimally protecting and/or supporting the battery cells 110. The module cover 120 may minimizing the weight and volume by exposing at least a portion of the battery cells 110. For example, referring to FIGS. 25 and 26, the module cover 120 may not cover at least a portion of both side surfaces and/or the lower surface of the battery cells 110. That is, at least a portion of both side surfaces and/or the lower surface of the battery cells 110 may be configured to be exposed. Therefore, the structural rigidity of the module cover 120 may be weaker than the structural rigidity of the pack case 210.

According to the above embodiment of the present disclosure, the battery cells 110 are protected and supported by the rigid pack case 210, and the portion additionally covered by the module cover 120 may be minimized. According to this method, the battery cells 110 may be further accommodated in the space occupied by the module case, pack case, or the like of the cell array 100 within the battery pack 10, and thus there is an effect of increasing space efficiency and improving battery capacity. Additionally, energy density may be maximized, the weight of the battery pack 10 may be reduced, and costs may be reduced.

The module cover 120 may be manufactured, for example, by bending a metal plate, and accordingly, the module cover 120 may be manufactured integrally. When the module cover 120 is manufactured integrally, the coupling process may be convenient and simplified. Alternatively, the module cover 120 may be provided in a separate form and coupled by welding or the like. However, the material of the module cover 120 is not limited to a metal material.

The top cover 121, the front cover 124, the rear cover 125, and the support members 122, 123 constituting the module cover 120 may be coupled and fixed to each other. For example, the top cover 121, the first bar 122, and the second bar 123 may have protrusions 126 protruding toward the front and rear surfaces. Additionally, the front cover 124 and the rear cover 125 may be provided with first fixing holes 127 corresponding to the size and shape of the protrusions 126 at portions corresponding to the protrusions 126. At this time, the front cover 124 and the rear cover 125 may each have four first fixing holes 127 formed therein. Each protrusion 126 may be fitted into each corresponding first fixing hole 127. However, the sizes and shapes of the plurality of protrusions 126 and the first fixing holes 127 may be different from each other. The method of coupling and fixing the module cover 120 is not limited by the above embodiment, and various other fastening methods may be applied.

The absorbent member 140 may be disposed on the front cover 124 and the rear cover 125.

The absorbent member 140 may be directly coupled to the module cover 120. Second fixing holes 144 corresponding to the sizes and shapes of the protrusions 126 formed on the top cover 121 and the support members 122, 123 of the module cover 120 may be provided at portions corresponding to the protrusions 126. At this time, four second fixing holes 144 may be formed in the absorbent member 140. Each protrusion 126 may be fitted into each corresponding second fixing hole 144. However, the sizes and shapes of the plurality of second fixing holes 144 may be different from each other. The method of coupling and fixing the module cover 120 and the absorbent member 140 is not limited by the above embodiment, and various other fastening methods may be applied.

The absorbent member 140 may include a front absorbent member 140a disposed on the front of the battery cells 110 and a rear absorbent member 140b disposed on the rear of the battery cells 110. The front absorbent member 140a may be disposed on the front cover 124, and the rear absorbent member 140b may be disposed on the rear cover 125.

Referring to FIG. 31, the respective absorbent members 140 of the facing cell arrays 100 inserted within one pack case 210 may face each other. The respective absorbent members 140 of the facing cell arrays 100 inserted within one pack case 210 may be configured to contact each other. That is, the rear absorbent member 140b disposed at the front of the cell array 100 and the front absorbent member 140a disposed at the rear of the cell array 100 may be disposed to face each other. At least a portion of the rear absorbent member 140b disposed at the front of the cell array 100 and the front absorbent member 140a disposed at the rear of the cell array 100 may be in direct contact with each other.

In this way, when the cell arrays 100 are slidably inserted into the pack case 210, the cell arrays 100 inevitably come into direct contact with each other. This process may cause collisions between the cell arrays 100 or movement of components inside the cell array 100 or battery cells 110. The absorbent member 140 of the present disclosure may be configured to prevent the movement of the battery cells 110 or components inside the cell array 100 and to absorb the impact resulting from collisions between the cell arrays 100. Additionally, the absorbent member 140 may offset or absorb assembly tolerances between the cell arrays 100. The absorbent member 140 covers the front and rear of the battery cells 100 within the cell array 100, thereby supplementing structural rigidity and responding to swelling of the battery cells 100.

The absorbent member 140 may include a body portion 142 that is vertically upright and flat, and a shock absorbing portion 141 extending from the body portion 142.

The shock absorbing portion 141 may protrude outward from the body portion 142. The shock absorbing portion 141 may be the portion that first contacts the adjacent cell array 100. For example, the shock absorbing portion 141 of the front absorbent member 140a may protrude forward from the body portion 142. The shock absorbing portion 141 of the rear absorbent member 140b may protrude rearward from the body portion 142.

According to the above embodiment of the present disclosure, when the shock absorbing portion 141 first contacts the adjacent cell array 100 and absorbs the shock caused by the contact, the shock applied to the battery cell 110 and internal components is reduced, thereby preventing the movement of the battery cell 110 or the like.

The shock absorbing portion 141 may be provided in plurality. The plurality of shock absorbing portions 141 may be evenly disposed across the entire body portion 142. The plurality of shock absorbing portions 141 may be arranged according to a specific pattern. For example, referring to FIG. 24, the plurality of shock absorbing portions 141 may be disposed to be spaced apart by a predetermined interval in the upper, lower, left, and right directions. Here, the predetermined interval may be defined as an interval corresponding to or larger than the size of the shock absorbing portion 141. That is, the shock absorbing portion 141 disposed on the lower side may be positioned between the shock absorbing portions 141 disposed on the upper side based on the X-axis direction. For convenience of description, the shock absorbing portion 141 may be defined as a protruding region, and the body portion 142 between the shock absorbing portions 141 may be defined as a concave region. That is, the protruding regions and the concave regions may be disposed alternately based on the same height. That is, the protruding regions and the concave regions may be disposed alternately based on the same Z-axis.

At this time, the arrangements of the shock absorbing portions 141 of the front absorbent member 140a and the rear absorbent member 140b may be different from each other. Specifically, the protruding region and the concave region of the front absorbent member 140a and the rear absorbent member 140b may be disposed opposite to each other. That is, the protruding region of the front absorbent member 140a may face the concave region of the rear absorbent member 140b, and the concave region of the front absorbent member 140a may face the protruding region of the rear absorbent member 140b. That is, the respective shock absorbing portions 141 of the front absorbent member 140a and the rear absorbent member 140b may not be in contact with each other.

According to the above embodiment of the present disclosure, when the cell arrays 100 within the pack case 210 are in direct contact with each other, the shock absorbing portion 141 of the front absorbent member 140a contacts the body portion 142 of the rear absorbent member 140b, and the body portion 142 of the front absorbent member 140a contacts the shock absorbing portion 141 of the rear absorbent member 140b, so that the entire region of the absorbent member 140 may absorb shock. That is, the shock absorbing area is about twice the area of the shock absorbing portion 141, and thus the shock may be absorbed more efficiently.

The shock absorbing portion 141 may include an absorbing pad 1412 disposed in parallel with the body portion 142, and connection members 1411, 1413 connecting the absorbing pad 1412 and the body portion 142. The absorbing pad 1412 may be a portion in direct contact with the facing cell array 100. The absorbing pad 1412 may be in direct contact with the absorbent member 140 of the facing cell array 100. The absorbing pad 1412 may be in direct contact with the body portion 142 of the facing cell array 100.

The connection members 1411, 1413 may be formed to extend from the body portion 142 and to be inclined at a predetermined angle from the body portion 142 and the absorbing pad 1412. The connection members 1411, 1413 may be formed on both sides (left and right sides) of the absorbing pad 1412. According to another embodiment, the connection members 1411, 1413 may be formed on the upper and lower sides of the absorbing pad 1412.

The body portion 142 may form an opening 145 in a portion overlapping the portion where the shock absorbing portion 141 is disposed. That is, the portion of the body portion 142 overlapping the portion where the shock absorbing portion 141 is disposed may be omitted. As the shape of the opening 145 is deformed, the shock absorbing portion 141 may be deformed.

The absorbent member 140 may include a material having rigidity and elasticity. For example, the absorbent member 140 may include at least one of materials such as plastic, rubber, silicon, aerogel, metal, and glass fiber reinforced plastic (GFRP). For example, the absorbent member 140 may include plastic.

According to the above embodiment of the present disclosure, the shape of the absorbing pad 1412 may not be prevented from temporarily indenting inward due to impact caused by contact between the cell arrays 100.

According to another embodiment, the shock absorbing portion 141 may be thicker than the body portion 142. Referring to FIG. 29, the shock absorbing portion 141 may be a separate component bonded and fixed onto the body portion 142. That is, the body portion 142 may include a material with high rigidity, while the shock absorbing portion 141 may include a material with relatively lower rigidity compared to the body portion 142 and high elasticity.

However, the shape and structure of the shock absorbing portion 141 are not limited by the above embodiment, and may be designed in various ways.

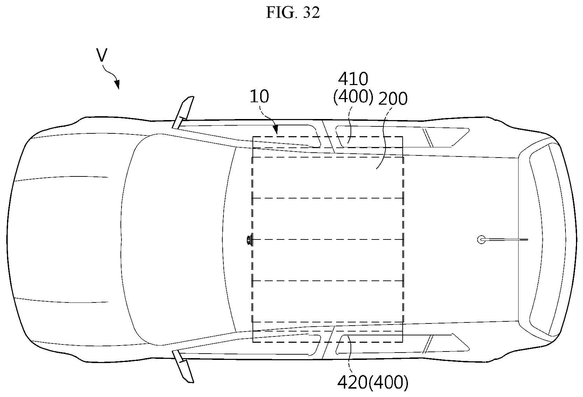

FIG. 32 is a schematic view of a vehicle V including a battery pack 10 according to an embodiment of the present disclosure.

Referring to FIG. 32, a vehicle V according to an embodiment of the present disclosure may include the battery pack 10 according to an embodiment of the present disclosure, or the cell array 100 and the pack case assembly 200 according to an embodiment of the present disclosure. The vehicle V according to the present disclosure may be, for example, an electric vehicle, a hybrid vehicle, or a plug-in hybrid vehicle. The vehicle V includes a four-wheeled vehicle and a two-wheeled vehicle. The vehicle V may operate by receiving power from the battery pack 10 or the cell array 100 according to an embodiment of the present disclosure.

The present disclosure has been described hereinabove with reference to a limited number of embodiments and drawings, but the present disclosure is not limited thereto and it is obvious that a variety of modifications and variations may be made thereto by those having ordinary skill in the art within the technical aspect of the present disclosure and the scope of the appended claims and their equivalents.

## Claims

1. A battery pack comprising:
a cell array comprising a plurality of battery cells;
a pack case assembly in which pack cases configured to accommodate at least one of the cell arrays are arranged in plurality; and
a venting valve configured to discharge venting gas generated from the battery cell to the outside,
wherein the cell array is configured to be inserted into the pack case in a first direction, and
wherein the pack cases are configured to be connected in a second direction perpendicular to the first direction.

2. The battery pack according to claim 1,
wherein the venting valve is disposed to pass through at least one venting hole formed on one surface of the pack case.

3. The battery pack according to claim 1,
wherein the venting valve is configured to pass through the lower plate of the pack case.

4. The battery pack according to claim 1,
wherein the venting valves are provided in plurality, and the plurality of venting valves are disposed to be spaced apart from each other in the first direction.

5. The battery pack according to claim 1,
wherein when a thermal event occurs in the battery cell, the venting valve induces the venting gas to be discharged downward.

6. The battery pack according to claim 1,
wherein the pack case has a rectangular tubular shape with an opening portion formed on the front or rear surface facing the first direction.

7. The battery pack according to claim 1,
wherein the lower plate of the pack case is configured to form a step.

8. The battery pack according to claim 7,
wherein the lower plate is divided into an edge portion protruding downward, a center portion positioned higher than the edge portion, and a middle portion positioned between the edge portion and the center portion and positioned higher than the center portion.

9. The battery pack according to claim 8,
wherein the venting valve is disposed to pass through the center portion of the lower plate.

10. The battery pack according to claim 1,
wherein the cell array further comprises a module cover configured to support the battery cells.

11. The battery pack according to claim 10,
wherein the battery cell comprises an electrode lead protruding downward from the lower surface of the battery cell, and
wherein the electrode lead is not covered by the module cover.

12. The battery pack according to claim 11,
wherein the electrode lead and the venting valve are disposed adjacent to each other.

13. The battery pack according to claim 1,
wherein when a thermal event occurs in the battery cell, venting gas is configured to be vented downward and discharged to the outside of the battery pack through the venting valve.

14. The battery pack according to claim 1,
wherein the pack case is configured to be formed by at least one of extrusion, forging, pressing, and casting.

15. The battery pack according to claim 1,
wherein the pack cases constituting the pack case assembly are configured to be welded together to be coupled.

16. The battery pack according to claim 1,
wherein the pack cases are configured to expand the size of the pack case assembly in the second direction by being sequentially coupled.

17. The battery pack according to claim 1,
wherein the pack case assembly is configured to be directly mounted on a chassis of a vehicle.

18. A vehicle comprising a battery pack according to any one of claims 1 to 17.

19. A vehicle comprising:
a cell array comprising a plurality of battery cells;
a pack case assembly in which pack cases configured to accommodate at least one of the cell arrays are arranged in plurality; and
a venting valve configured to discharge venting gas generated from the battery cell to the outside,
wherein the cell array is configured to be inserted into the pack case in a first direction,
wherein the pack cases are configured to be connected in a second direction perpendicular to the first direction, and
wherein the pack case assembly is configured to be directly mounted on the chassis of the vehicle.

20. The vehicle according to claim 19,
wherein the venting valve is disposed to pass through at least one venting hole formed on one surface of the pack case.

21. The vehicle according to claim 19,
wherein the venting valve is configured to pass through the lower plate of the pack case.

22. The vehicle according to claim 19,
wherein the venting valves are provided in plurality, and the plurality of venting valves are disposed to be spaced apart from each other in the first direction.

23. The vehicle according to claim 19,
wherein when a thermal event occurs in the battery cell, the venting valve induces the venting gas to be discharged downward.

24. The vehicle according to claim 19,
wherein the pack case has a rectangular tubular shape with an opening portion formed on the front or rear surface facing the first direction.

25. The vehicle according to claim 19,
wherein the lower plate of the pack case is configured to form a step.

26. The vehicle according to claim 25,
wherein the lower plate is divided into an edge portion protruding downward, a center portion positioned higher than the edge portion, and a middle portion positioned between the edge portion and the center portion and positioned higher than the center portion.

27. The vehicle according to claim 26,
wherein the venting valve is disposed to pass through the center portion of the lower plate.

28. The vehicle according to claim 19,
wherein the cell array further comprises a module cover configured to support the battery cells.

29. The vehicle according to claim 28,
wherein the battery cell comprises an electrode lead protruding downward from the lower surface of the battery cell, and
wherein the electrode lead is not covered by the module cover.

30. The vehicle according to claim 29,
wherein the electrode lead and the venting valve are disposed adjacent to each other.

31. The vehicle according to claim 19,
wherein when a thermal event occurs in the battery cell, venting gas is configured to be vented downward and discharged to the outside of the vehicle through the venting valve.

32. The vehicle according to claim 19,
wherein the pack case is configured to be formed by at least one of extrusion, forging, pressing, and casting.

33. The vehicle according to claim 19,
wherein the pack cases constituting the pack case assembly are configured to be welded together to be coupled.

34. The vehicle according to claim 19,
wherein the pack cases are configured to expand the size of the pack case assembly in the second direction by being sequentially coupled.

35. The vehicle according to claim 19,
wherein the pack case assembly is configured to be directly mounted on the chassis of the vehicle.
